# EUROPEAN PATENT SPECIFICATION

(11) **EP 3 838 438 B1**
(45) Date of publication and mention of the grant of the patent: **12.07.2023**
(21) Application number: 20211825.3
(22) Date of filing: 04.12.2020
(51) Int. Cl.: B21J 15/04, B21J 15/10, B21J 15/32, B24B 45/00, B23B 31/107, B25B 23/00, F16B 2/24

(54) **RIVET HOLDER**
NIETHALTER
PORTE-RIVET

(30) Priority: 17.12.2019 HK 19133746
(43) Date of publication of application: 23.06.2021
(73) Proprietor: Techtronic Cordless GP, Anderson, SC 29621 (US)
(72) Inventor: Lam, Chin Hung, Kwai Chung (HK); Lee, Kwan Wing, Kwai Chung (HK)
(74) Representative: Novagraaf Group

(56) References cited:
- EP-A1- 1 123 172
- EP-A1- 2 502 686
- EP-A2- 1 541 266
- EP-A2- 2 837 468
- DE-A1-102011 001 198
- DE-A1-102012 019 177
- US-A- 5 347 892

## Description

### TECHNICAL FIELD

The invention relates to a rivet holder for a rivet gun. The invention also relates to a rivet gun having such a rivet holder.

### BACKGROUND

Power tools are utilised widely for both professional/industrial and personal purposes, including in construction, gardening and around the house for the purposes of drilling, sanding, grinding, polishing for example. Power tools can vary depending on their intended use as their applications are diverse. Accordingly, power tools utilise different work members. Typically, a user using a power tool would use the power tool freely with unrestricted movement for maximum comfort and efficiency.

Document EP 2 502 686 A1 shows a rivet holder and a rivet gun comprising the rivet holder, and forms the basis for the preamble of claims 1 and 8.

### SUMMARY

According to the invention, the problem is solved by the subject matter outlined in independent claims 1 and 8. Advantageous further developments of the invention are set forth in the dependent claims.

### BRIEF DESCRIPTION OF THE DRAWINGS

Embodiments of the invention will now be described, by way of example, with reference to the accompanying drawings in which:
Figure 1A is a front cross-sectional view of a rivet holder in accordance with an example.
Figure 1B is a side view of the rivet holder in Figure 1A.
Figure 1C is a cross-sectional side view of the rivet holder in Figure 1A.
Figure 1D is a cross-sectional side view of the rivet holder in Figure 1A with a rivet (schematically illustrated) inserted in the rivet holder.
Figure 2A is a front perspective view of a holding member of a rivet holder in accordance with an example embodiment of the invention.
Figure 2B is a front cross-sectional view of a rivet holder with the holding member in Figure 2A in accordance with an example embodiment of the present invention.
Figure 2C is a top view of the rivet holder in Figure 2B.
Figure 2D is a side cross-sectional view of the rivet holder in Figure 2B.
Figure 3A is a front perspective view of a holding member of a rivet holder in accordance with an example embodiment of the invention.
Figure 3B is a front cross-sectional view of a rivet holder with the holding member in Figure 3A in accordance with an example embodiment of the invention.
Figure 3C is a top view of the rivet holder in Figure 3B.
Figure 3D is a side cross-sectional view of the rivet holder in Figure 3B.
Figure 4A is a perspective view of a holding member of a rivet holder in accordance with an example embodiment of the invention.
Figure 4B is a front cross-sectional view of a rivet holder with the holding member in Figure 4A in accordance with an example embodiment of the invention.
Figure 4C is a top view of the rivet holder in Figure 4B.
Figure 4D is a side cross-sectional view of the rivet holder in Figure 4B.
Figure 5A is a perspective view of a holding member of a rivet holder in accordance with an example embodiment of the invention.
Figure 5B is a front cross-sectional view of a rivet holder with the holding member in Figure 5A in accordance with an example embodiment of the invention.
Figure 5C is a top view of the rivet holder in Figure 5B.
Figure 5D is a side cross-sectional view of the rivet holder in Figure 5B.

### DETAILED DESCRIPTION

Power tools are used for a wide variety of tasks and have wide-reaching application, for example in industry, construction, gardening, and housework to name a few. Different types of power tools with different work members may be utilised depending on the task at hand, such as a drill, nail gun or rivet gun, etc. Typically, a user of a power tool moves the power tool with the work member freely during a task.

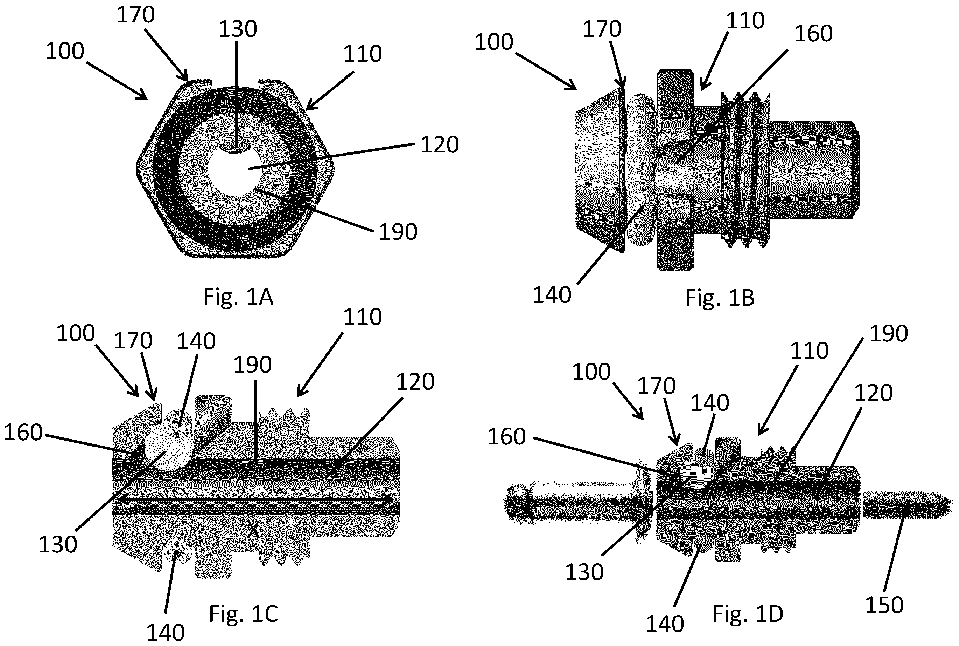

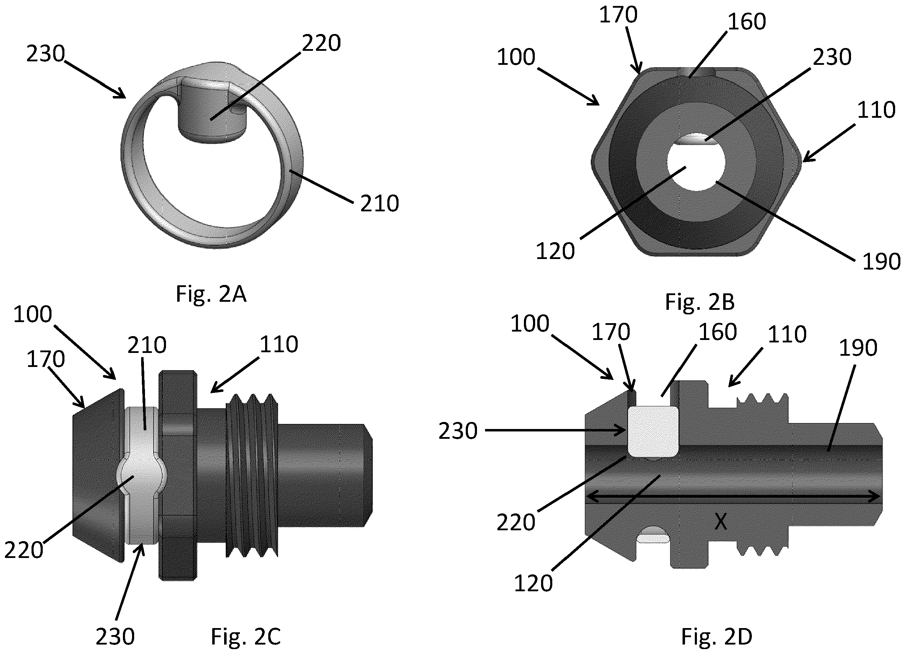

Example embodiments are directed to a rivet holder. Figures 1A-1D illustrate an example of a rivet holder 100 not forming part of the invention. Figures 2A-2D, 3A-3D, 4A-4D, and 5A-5D illustrate example embodiments of a rivet holder 100. The rivet holder 100 may be separable from a body of a rivet gun. The rivet holder 100 includes a body 110 with an outer wall 170. The body 110 defines a channel 120 for inserting a mandrel 150 of a rivet.

The channel 120 is defined by a circumferential inner wall 190 and extends along an x axis (X) along at least a portion of the body 110. A mandrel 150 when inserted into the rivet holder 100 is aligned with the channel 120.

The rivet holder 100 also includes a holding member. The holding member applies a force on the mandrel 150 of the rivet in a direction perpendicular to the length of the channel 120. The holding member may, for example, be disposed on at least a portion of the inner wall 190 of the channel 120, thereby enabling the mandrel 150 of the work member to be held in the channel 120. For example, the holding member may include a resilient member disposed on at least a portion of the inner surface of the channel 120 that enables gripping of the mandrel 150 using friction. The holding member also protrudes from the inner surface of the channel 120, thereby reducing or narrowing the diameter of the channel 120 for grasping the mandrel 150 and holding it in place.

Figures 1A-1D, 2A-2D, 3A-3D, 4A-4D, and 5A-5D illustrate a rivet work holder 100 that includes a holding member 130, 230, 330, 430, 530. The holding member 130, 230, 330, 430, 530 applies a force on the mandrel 150 of the rivet in a direction perpendicular to the length of the channel 120, depicted in the figures with an "X", to hold the mandrel 150 of the rivet. The holding member 130, 230, 330, 430, 530 grips and holds the mandrel 150 and prevents it from falling out of the rivet holder 100 or power tool during free movement or, for example, if the rivet holder 100 is pointed downwards, thereby allowing the rivet to stay in the rivet holder 100. According to the invention, the holding member 230, 330, 430, 530 at least partially extends into the channel 120 to hold the mandrel 150 of the rivet.

Figures 1A-1D illustrate a work member holder 100 in accordance with an example not forming part of the invention. The rivet holder 100 includes a groove or depression 160 in the body 110, a holding member 130 housed at least partially within the groove 160, and a supporting means 140 for pushing the holding member 130 towards the inner wall 190 of the channel 120 and causing at least a portion of the holding member 130 to extend, or protrude, into the channel 120. Preferably, the groove 160 extends from the inner wall 190 of the channel 120 towards the outer wall 170 of the body 110 at an incline or perpendicular to the x-axis of the channel 120, wherein the opening into the channel 120 is formed narrowly such that the holding member 130 extending into the channel 120 does not fall into the channel 120.

In an example, the holding member 130 is circular, spherical, or cylindrical component. In a further example, the holding member 130 is a steel ball or sphere and the mandrel 150 is held in place by friction.

In an example, the supporting means 140 can be an elastic ring. The elastic ring can be an O-ring. The supporting means 140 may also be a spring, for example a spring clip that provides a spring force to hold the mandrel 150 in place.

In another example, the groove 160 extends from the inner wall 190 to the outer wall 170 at an incline with respect to the x-axis of the channel 120. For example, the incline is at an angle of 30-110 degrees. The incline is preferably at an angle of 90 degrees to the x-axis.

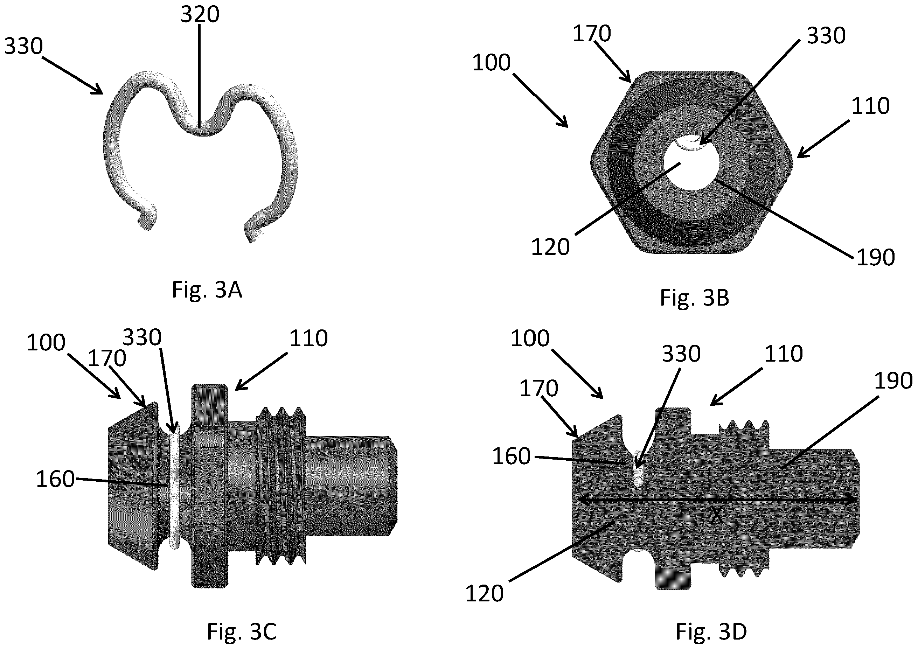

Figures 2A-2D and figures 3A-3D illustrate a rivet holder 100 in accordance with an example embodiment. According to the invention, the holding member 230,330 extends at least partially in a circumferential direction. This is illustrated in Figures 2A-2D and Figures 3A-3D. In Figures 2A-2D, the holding member 230 is circular and extends in a circumferential direction and comprises a ring 210 and a protrusion 220. The protrusion 220 extends inward toward a centre of the ring 210. Preferably, the holding member 230, particularly the ring 210, is disposed circumferentially around the outer wall 170 of the body 110 and the protrusion 220 protrudes or extends from the outer wall 170 into the channel 120 via a groove 160 extending from the outer wall 170 to the inner wall 190 such that the holding member 230 holds the mandrel 150 of the rivet by friction.

According to the invention, the holding member 230 is a resilient member that provides a spring force and retains the mandrel 150 of the rivet by friction. In a particular embodiment, the holding member 230 is an elastic ring. The elastic ring may be a rubber ring. The rubber ring may be a colour coded rubber ring for different-sized rivets.

Figures 3A-3D illustrates one example embodiment of a rivet holder 100 comprising a holding member 330. The holding member 330 extends partially in a circumferential direction. The holding member 330 includes a protrusion 320 such that when the holding member 330 is disposed around the outer wall 170 of the body 110 of the work member holder 100, the protrusion 320 protrudes into the channel 120 via a groove 160 extending from the outer wall 170 to the inner wall 190 such that the holding member 330 holds the mandrel 150 of the rivet by friction. In a particular embodiment, the holding member 330 is a spring. Preferably, the spring is a spring clip.

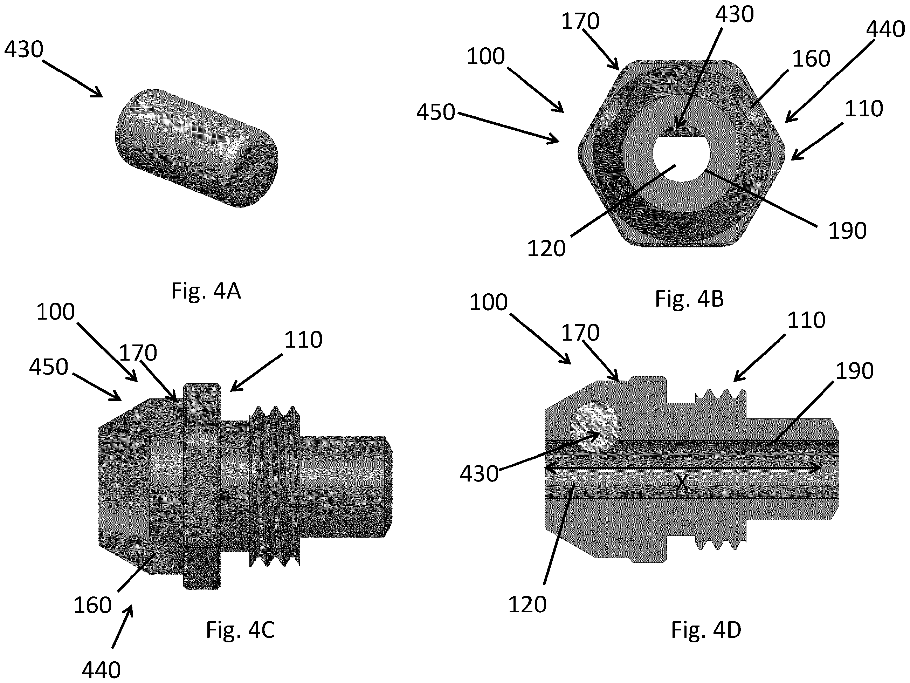

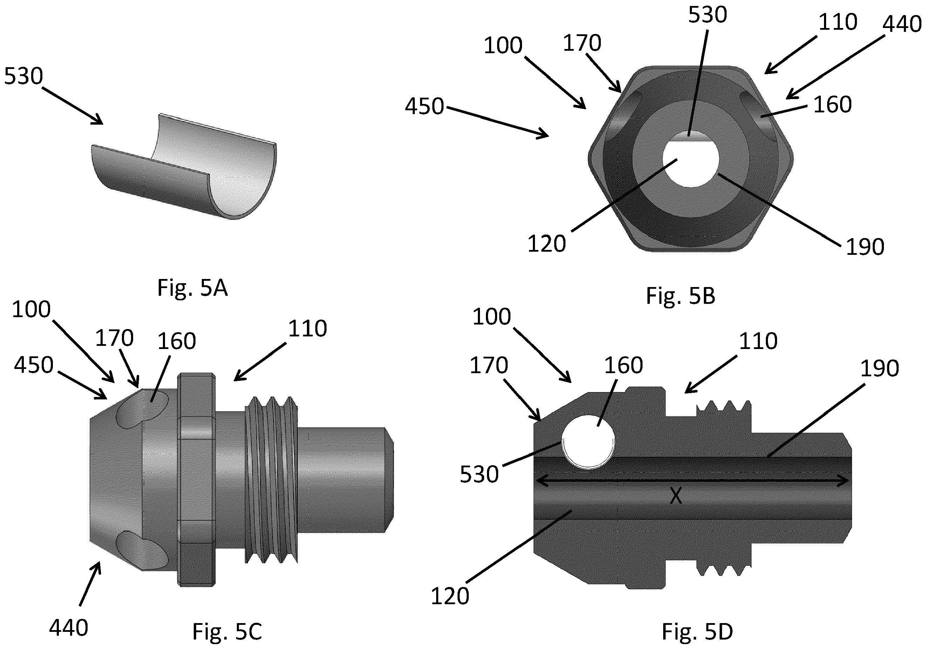

Figures 4A-4D and figures 5A-5D show example embodiments of a rivet holder 100 comprising a holding member 430, 530. According to the invention, the holding member 430, 530 extends in a direction perpendicular to the length of the channel 120. With reference to Figures 4A - 4D, the holding member 430 runs perpendicular the length (X) of the channel 120 and a portion of the holding member 430 extends into the channel 120 thereby providing friction to hold the mandrel 150 in place. With reference to Figure 4B and 4C, a groove 160 in the body 110 runs perpendicular to the length (X) of the channel 120, the groove 160 extending from the inner wall 190 of the channel to or towards the outer wall 170 of the body 110. The groove 160 runs diametrically across from a first end 440 of the body 110 to a second end 450 of the body 110 in a direction perpendicular to the length (X) of the channel 120. The holding member 430 is housed within the groove 160 and partially extends into the channel 120 to hold the mandrel 150 of the rivet in the channel 120.

The holding member 430, for example, may be cylindrical but can also be any other shape. In an example embodiment, the holding member 430 comprises rubber. In a further example embodiment, the holding member 430 comprises soft rubber in a cylindrical shape.

Figures 5A-5D show yet another example embodiment of a rivet holder 100.Similarly to Figure 4B and Figure 4C, the holding member 530 extends in a direction perpendicular to the length (X) of the channel 120. The groove 160 runs from a first end 440 of the body 110 to a second end 450 of the body 110 in a direction perpendicular to the length (X) of the channel 120. The holding member 530 is housed in the groove 160 and protrudes partially into the channel 120 to hold the mandrel 150 of the work member. In an example embodiment, the holding member 530 is a spring. In a further example embodiment, the holding member 530 is a spring clip.

Example embodiments are also directed to a rivet gun that includes the rivet holder 100 as described previously.

The rivet holder 100 of the invention advantageously allows for unfettered and unrestricted movement of the rivet holder 100, or rivet gun including the same, by a user without having the need to confine their movements to prevent a rivet from falling out of the rivet holder 100 or rivet gun. This allows the user to focus an the task at hand without being concerned with mobility, thereby maximising efficiency and end user experience.

Any reference to prior art contained herein is not to be taken as an admission that the information is common general knowledge, unless otherwise indicated.

## Claims

1. A rivet holder (100), comprising:
a body (110) defining a channel (120) for inserting a mandrel (150) of a rivet; and
a holding member (230, 330) for applying a force on the mandrel in a direction perpendicular to the length of the channel (120), the holding member (230, 330) being a resilient member extending at least partially in a circumferential direction of the body,
**characterized in that**
the holding member (230, 330) comprises an integrally formed protrusion (220, 320) at least partially extending into the channel (120) to hold the mandrel of the rivet.

2. The rivet holder (100) of claim 1, wherein the holding member (230, 330) extends in a direction perpendicular to the length of the channel (120).

3. The rivet holder (100) of claim 1, wherein the holding member (230, 330) is circular.

4. The rivet holder (100) of claim 1, wherein the holding member (230, 330) is cylindrical.

5. The rivet holder (100) of claim 1, wherein the holding member (230, 330) is an elastic ring.

6. The rivet holder (100) of claim 1, wherein the holding member (230, 330) is a spring.

7. The rivet holder (100) of any of the preceding claims, wherein the holding member (230, 330) comprises rubber.

8. A rivet holder (100), comprising:
a body (110) defining a channel (120) for inserting a mandrel (150) of a rivet;
a holding member (430, 530) for applying a force on the mandrel in a direction perpendicular to the length of the channel to hold the mandrel of the rivet in the channel,
**characterized in that**
a groove (160) runs diametrically across the body in a direction perpendicular to a length of the channel, the holding member (430, 530) being housed within the groove and partially extending into the channel to hold the mandrel of the rivet.

9. The rivet holder (100) of claim 8, wherein the holding member (430, 530) is cylindrical.

10. The rivet holder (100) of claim 8, wherein the holding member (430, 530) is a spring.

11. The rivet holder (100) of any one of claims 8 to 10, wherein the holding member (430, 530) comprises rubber.

12. A rivet gun comprising the rivet holder (100) of any of the preceding claims.

## Patentansprüche

1. Niethalter (100), umfassend:
einen Körper (110), der einen Kanal (120) zum Einsetzen eines Dorns (150) eines Niets definiert; und
ein Halteelement (230, 330) zum Aufbringen einer Kraft auf den Dorn in einer Richtung senkrecht zu der Länge des Kanals (120), wobei das Halteelement (230, 330) ein elastisches Element ist, das sich mindestens teilweise in einer Umfangsrichtung des Körpers erstreckt,
**dadurch gekennzeichnet, dass**
das Halteelement (230, 330) einen einstückig ausgebildeten Vorsprung (220, 320) umfasst, der sich mindestens teilweise in den Kanal (120) erstreckt, um den Dorn des Niets zu halten.

2. Niethalter (100) nach Anspruch 1, wobei sich das Halteelement (230, 330) in einer Richtung senkrecht zu der Länge des Kanals (120) erstreckt.

3. Niethalter (100) nach Anspruch 1, wobei das Halteelement (230, 330) kreisförmig ist.

4. Niethalter (100) nach Anspruch 1, wobei das Halteelement (230, 330) zylindrisch ist.

5. Niethalter (100) nach Anspruch 1, wobei das Halteelement (230, 330) ein elastischer Ring ist.

6. Niethalter (100) nach Anspruch 1, wobei das Halteelement (230, 330) eine Feder ist.

7. Niethalter (100) nach einem der vorstehenden Ansprüche, wobei das Halteelement (230, 330) Gummi umfasst.

8. Niethalter (100), umfassend:
einen Körper (110), der einen Kanal (120) zum Einsetzen eines Dorns (150) eines Niets definiert;
ein Halteelement (430, 530) zum Aufbringen einer Kraft auf den Dorn in einer
Richtung senkrecht zu der Länge des Kanals, um den Dorn des Niets in dem Kanal zu halten,
**dadurch gekennzeichnet, dass**
eine Nut (160) diametral über den Körper hinweg in einer Richtung senkrecht zu einer Länge des Kanals verläuft, wobei das Halteelement (430, 530) innerhalb der Nut untergebracht ist und sich teilweise in den Kanal erstreckt, um den Dorn des Niets zu halten.

9. Niethalter (100) nach Anspruch 8, wobei das Halteelement (430, 530) zylindrisch ist.

10. Niethalter (100) nach Anspruch 8, wobei das Halteelement (430, 530) eine Feder ist.

11. Niethalter (100) nach einem der Ansprüche 8 bis 10, wobei das Halteelement (430, 530) Gummi umfasst.

12. Handnietmaschine, umfassend den Niethalter (100) nach einem der vorstehenden Ansprüche.

## Revendications

1. Porte-rivet (100), comprenant :
un corps (110) définissant un canal (120) permettant d'insérer un mandrin (150) d'un rivet ; et
un élément de maintien (230, 330) permettant d'appliquer une force sur le mandrin dans une direction perpendiculaire à la longueur du canal (120), l'élément de maintien (230, 330) étant un élément élastique s'étendant au moins partiellement dans une direction circonférentielle du corps,
**caractérisé en ce que**
l'élément de maintien (230, 330) comprend une saillie (220, 320) formée d'un seul tenant s'étendant au moins partiellement dans le canal (120) pour maintenir le mandrin du rivet.

2. Porte-rivet (100) selon la revendication 1, dans lequel l'élément de maintien (230, 330) s'étend dans une direction perpendiculaire à la longueur du canal (120).

3. Porte-rivet (100) selon la revendication 1, dans lequel l'élément de maintien (230, 330) est circulaire.

4. Porte-rivet (100) selon la revendication 1, dans lequel l'élément de maintien (230, 330) est cylindrique.

5. Porte-rivet (100) selon la revendication 1, dans lequel l'élément de maintien (230, 330) est un anneau élastique.

6. Porte-rivet (100) selon la revendication 1, dans lequel l'élément de maintien (230, 330) est un ressort.

7. Porte-rivet (100) selon l'une quelconque des revendications précédentes, dans lequel l'élément de maintien (230, 330) comprend du caoutchouc.

8. Porte-rivet (100), comprenant :
un corps (110) définissant un canal (120) permettant d'insérer un mandrin (150) d'un rivet ;
un élément de maintien (430, 530) permettant d'appliquer une force sur le mandrin dans une direction perpendiculaire à la longueur du canal pour maintenir le mandrin du rivet dans le canal,
**caractérisé en ce que**
une rainure (160) s'étend diamétralement à travers le corps dans une direction perpendiculaire à une longueur du canal, l'élément de maintien (430, 530) étant logé à l'intérieur de la rainure et s'étendant partiellement dans le canal pour maintenir le mandrin du rivet.

9. Porte-rivet (100) selon la revendication 8, dans lequel l'élément de maintien (430, 530) est cylindrique.

10. Porte-rivet (100) selon la revendication 8, dans lequel l'élément de maintien (430, 530) est un ressort.

11. Porte-rivet (100) selon l'une quelconque des revendications 8 à 10, dans lequel l'élément de maintien (430, 530) comprend du caoutchouc.

12. Pistolet à riveter comprenant le porte-rivet (100) selon l'une quelconque des revendications précédentes.
